(19) Europäisches Patentamt
European Patent Office
Office européen des brevets

(11) Numéro de publication : 0 349 369 B1

(12) # FASCICULE DE BREVET EUROPEEN

(45) Date de publication du fascicule du brevet : **20.05.92 Bulletin 92/21**

(51) Int. Cl.$^5$ : **C10L 1/22,** C10L 1/14

(21) Numéro de dépôt : **89401672.4**

(22) Date de dépôt : **14.06.89**

(54) **Compositions obtenues à partir d'hydroxymidazolines et de polyamines et leur utilisation comme additif pour carburants.**

(30) Priorité : **29.06.88 FR 8808899**
**28.04.89 FR 8905859**

(43) Date de publication de la demande : **03.01.90 Bulletin 90/01**

(45) Mention de la délivrance du brevet : **20.05.92 Bulletin 92/21**

(84) Etats contractants désignés : **AT BE CH DE ES FR GB IT LI NL SE**

(56) Documents cités :
**EP-A- 0 074 724**
**FR-A- 2 252 868**
**US-A- 3 172 892**
**US-A- 4 643 738**

(73) Titulaire : **INSTITUT FRANCAIS DU PETROLE**
**4, Avenue de Bois Préau**
**F-92502 Rueil-Malmaison (FR)**
Titulaire : **ELF FRANCE**
**Tour Elf 2, Place de la Coupole**
**LA DEFENSE 6 - 92400 Courbevoie (FR)**

(72) Inventeur : **Montagne, Xavier**
**14 rue Ernest Renan**
**F-75015 Paris (FR)**
Inventeur : **Touet, Rémi**
**Résidence Mutualiste Le Fontanil**
**F-38120 Saint Egrève (FR)**
Inventeur : **Mulard, Philippe**
**36, avenue de Mozart**
**F-69780 Saint Pierre de Chandieu (FR)**
Inventeur : **Eber, Danièle**
**Rue des Noyers, Parc Garenne Bât. A**
**F-69005 Lyon (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



Jouve, 18, rue Saint-Denis, 75001 PARIS

## Description

La présente invention concerne des compositions, utilisables notamment comme additifs multifonctionnels pour carburants moteurs, obtenues par réaction sur au moins un acide ou un anhydridre succinique, successivement, d'au moins une hydroxyimidazoline et d'au moins une polyamine.

L'utilisation de carburants conventionnels conduit très souvent à l'encrassement des différentes parties du moteur par suite de la vaporisation et de la combustion incomplètes du carburant dans le système d'admission et/ou dans la chambre de combustion et par suite de la présence de traces de lubrifiants.

Dans le système d'admission, l'accumulation de ces dépôts peut ainsi se faire au niveau des injecteurs, du carburateur et des soupapes d'admission.
Une telle accumulation a des conséquences néfastes tant au niveau de l'agrément de conduite, avec l'apparition de ralenti instable et de ratés dans les moteurs à allumage commandé, qu'au niveau du fonctionnement optimal du moteur par modification de la richesse comme suite aux phénomènes d'adsorption-désorption du carburant sur les dépôts formés.
Afin de remédier à l'encrassement il est possible de procéder à un nettoyage périodique, particulièrement onéreux, des organes concernés en particulier des soupapes.

L'accumulation de dépôts dans les moteurs et en particulier sur les soupapes d'admission peut également être réduite par l'utilisation de carburants contenant certains additifs, par exemple des additifs du type détergent éventuellement combinés par exemple avec des additifs anticorrosion ou antidépôts pour chambre de combustion.

Les additifs, bien connus dans le commerce, par exemple ceux du type polyisobutène-amine, sont habituellement associés à une huile minérale ou synthétique et sont susceptibles de provoquer un encrassement accru des chambres de combustion et donc une augmentation de l'exigence en octane du moteur avec une plus grande sensibilité au phénomène de cliquetis.

Parmi les nombreux additifs décrits dans l'art antérieur on peut citer les produits de condensation des anhydrides polyalcénylsucciniques sur des polyamines, telles que, par exemple, la tétraéthylènepentamine, qui sont en particulier décrits dans le brevet USA-3172892. Ces additifs donnent de bons résultats au niveau des propriétés anticorrosion, mais ne sont pas efficaces comme détergents de soupapes.

On peut également citer les produits de condensation des anhydrides polyalcénylsucciniques sur des hydroxyimidazolines et en particulier sur des 1-(2-hydroxyéthyl) imidazolines substituées en position 2 par un groupe alkyle ou alcényle, tels que ceux qui sont décrits dans la demande de brevet EP-A-74724. Les produits décrits dans cette demande sont de bons additifs pour carburants moteurs et ont une action anticorrosion importante mais ne sont pas très efficaces au niveau de la détergence du carburateur.

On a maintenant découvert de façon surprenante des compositions, telles que décrites ci-après, utilisables notamment comme additifs multifonctionnels pour carburants moteurs en particulier pour les carburants utilisés dans les moteurs à allumage commandé. Les compositions de la présente invention ont d'excellentes propriétés détergentes au niveau des soupapes d'admission et du carburateur, et ont de très bonnes propriétés d'anticorrosion.

Ces compositions, utilisées comme additifs multifonctionnels dans les carburants moteurs, et plus particulièrement dans les carburants employés pour les moteurs à allumage commandé, inhibent, ou réduisent largement, la formation de dépôts sur les soupapes d'admission, ainsi que l'encrassement des carburateurs ou des injecteurs ; de plus elles diminuent fortement la corrosion des diverses pièces mécaniques avec lesquelles le carburant entre en contact.

La présente invention a pour objet une composition, utilisable notamment comme additif multifonctionnel pour carburants moteurs, qui résulte, dans une première étape, de la réaction d'au moins un dérivé succinique choisi dans le groupe formé par les acides et les anhydrides alcénylsucciniques et les acides et les anhydrides polyalcénylsucciniques, sur au moins une 1-(2-hydroxyéthyl)-imidazoline substituée en position 2 par un radical alkyle ou alcényle, linéaire ou ramifié, ayant de 1 à 25 atomes de carbone, le rapport molaire imidazoline/dérivé succinique étant de 0,1:1 à 0,9:1, de préférence de 0,2:1 à 0,8:1 et le plus souvent de 0,3:1 à 0,7:1, ladite étape étant effectuée dans des conditions telles que l'on forme et que l'on élimine au moins 0,15 mole d'eau par mole d'imidazoline engagée ; et dans une deuxième étape de la réaction du produit issu de la première étape sur au moins une polyamine répondant à l'une des formules générales :

(I) 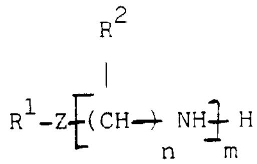 ou

(II) 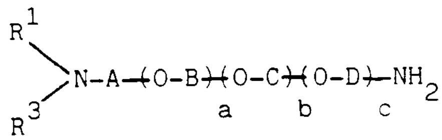

dans lesquelles $R^1$ représente un atome d'hydrogène ou un groupe hydrocarboné ayant de 1 à 60 atomes de carbone, Z est choisi parmi les groupes -O- et $-NR^3-$ dans lesquels $R^3$ représente un atome d'hydrogène ou un groupe hydrocarboné ayant de 1 à 60 atomes de carbone, $R^1$ et $R^3$ pouvant former ensemble avec l'atome d'azote auquel ils sont liés un hétérocycle, chacun des $R^2$ indépendamment représente un atome d'hydrogène ou un groupe hydrocarboné ayant de 1 à 4 atomes de carbone, n est un nombre entier de 2 a 6, m est un nombre entier de 1 à 10 lorsque Z est $-NR^3-$ et un nombre entier de 2 à 10 lorsque Z est -O-, A, B, C et D, identiques ou différents, représentent chacun un groupe hydrocarboné divalent ayant de 2 à 6 atomes de carbone, a est un nombre entier de 1 à 120 (de préférence de 1 à 60), b et c, identiques ou différents, sont chacun zéro ou un nombre entier de 1 à 100 (de préférence de 1 à 50) et la somme a + b + c est un nombre entier de 1 à 120 (de préférence de 1 à 60), la quantité de polyamine mise en réaction étant d'au moins 0,1 mole par mole de dérivé succinique introduit dans la première étape. La quantité totale d'imidazoline substituée et de polyamine est de préférence de 0,8 à 1,2 mole par mole de dérivé succinique.

L'acide ou l'anhydride succinique utilisé dans le cadre de la présente invention a, habituellement, une masse moléculaire moyenne en nombre d'environ 200 à 3000, de préférence 500 à 2000 et le plus souvent 700 à 1500. Ces dérivés succiniques sont largement décrits dans l'art antérieur ; ils sont par exemple obtenus par l'action d'au moins une oléfine alpha ou d'un hydrocarbure chloré sur l'acide ou l'anhydride maléique. L'oléfine alpha ou l'hydrocarbure chloré utilisé dans cette synthèse peuvent être linéaires ou ramifiés, et comportent habituellement de 10 à 150 atomes de carbone, de préférence de 15 à 80 atomes de carbone et le plus souvent de 20 à 75 atomes de carbone dans leur molécule. Cette oléfine peut également être un oligomère, par exemple un dimère, un trimère ou un tétramère, ou un polymère d'une oléfine inférieure, ayant par exemple de 2 à 10 atomes de carbone, telle que l'éthylène, le propylène, le n-butène-1, l'isobutène, le n-hexène-1, le n-octène-1, le méthyl-2-heptène-1 ou le méthyl-2-propyl-5- hexène--1. Il est possible d'utiliser des mélanges d'oléfines ou des mélanges d'hydrocarbures chlorés.

A titre d'exemples d'anhydrides succiniques on peut citer l'anhydride n-octadécénylsuccinique, l'anhydride dodécénylsuccinique et les anhydrides polyisobuténylsucciniques, souvent dénommés PIBSA, ayant une masse moléculaire moyenne en nombre telle que définie ci-avant. Les 1-(2-hydroxyéthyl-)-imidazolines substituées en position 2 par un radical alkyle ou alcényle ayant de 1 à 25 atomes de carbone sont habituellement des composés commerciaux ou qui peuvent être synthétisés par exemple par réaction d'au moins un acide organique avec la N-(2-hydroxyéthyl)-éthylènediamine. La réaction procède par une première étape d'amidification suivie d'une cyclisation. Les acides organiques utilisés ont habituellement de 2 à 26 atomes de carbone ; ce sont de préférence des acides aliphatiques monocarboxyliques.

A titre d'exemple on peut citer l'acide acétique, l'acide propanoïque, l'acide butanoïque, l'acide caproïque, l'acide caprique, l'acide laurique, l'acide myristique, l'acide palmitique, l'acide stéarique, l'acide béhénique, l'acide cérotique et les acides gras insaturés suivant :

| | |
|---|---|
| $CH_3-CH_2-CH=CH-(CH_2)_7COOH$ | acide dodécylénique |
| $CH_3-(CH_2-)_5CH=CH-(CH_2-)_7COOH$ | acide palmitoléique |
| $CH_3-(CH_2-)_7CH=CH-(CH_2-)_7COOH$ | acide oléique |
| $CH_3-(CH_2-)_5CHOH-CH_2-CH=CH-(CH_2-)_7COOH$ | acide ricinoléique |
| $CH_3-(CH_2-)_{10}CH=CH-(CH_2-)_4COOH$ | acide pétrosélénique |
| $CH_3-(CH_2-)_5CH=CH-(CH_2-)_9COOH$ | acide vaccénique |
| $CH_3-(CH_2-)_4CH=CH-CH_2-CH=CH-(CH_2-)_7COOH$ | acide linoléique |
| $CH_3-(CH_2-)_9CH=CH-(CH_2-)_7COOH$ | acide gadoléique |
| $CH_3-(CH_2-)_9CH=CH-(CH_2-)_9COOH$ | acide cétoléique |
| $CH_3-(CH_2-)_7CH=CH-(CH_2-)_{11}COOH$ | acide érucique |
| $CH_3-(CH_2-)_7CH=CH-(CH_2-)_{13}COOH$ | acide sélacholéique |

On utilisera par exemple la 1-(2-hydroxyéthyl)-2-heptadécényl imidazoline, préparée par exemple à partir de l'acide oléique et de la N-(2-hydroxyéthyl)-éthylènediamine. Cette préparation est par exemple décrite dans le brevet US-A-2987515.
On peut également citer à titre d'exemple la 1-(2-hydroxyéthyl)-2-méthyl imidazoline préparée par exemple à partir de l'acide acétique et de la N-(2-hydroxyéthyl-)éthylènediamine.
La 1-(2-hydroxyéthyl)-2 heptadécénylimidazoline est commercialisée par la société CIBA-GEIGY sous le nom "Amine-O" et par la société PROTEX sous le nom "Imidazoline-O".

La première étape de préparation de la composition selon l'invention est habituellement effectuée par addition progressive du dérivé de l'imidazoline à une solution du dérivé succinique dans un solvant organique, a température ordinaire, puis chauffage à une température habituellement comprise entre 65 et 250 °C et de préférence entre 80 et 200 °C.
Le solvant organique utilisé dans cette préparation a un point d'ébullition compris entre 65 et 250 °C et est habituellement choisi de manière à pouvoir permettre l'élimination de l'eau formée au cours de la condensation de l'imidazoline sur le dérivé succinique, de préférence sous forme d'un azéotrope eau-solvant organique. On utilisera habituellement un solvant organique tel que par exemple le benzène, le toluène, les xylènes, l'éthylbenzène ou une coupe d'hydrocarbures telle que par exemple la coupe commerciale SOLVESSO 150 (190-209 °C) contenant 99 % en poids de composés aromatiques. Il est possible d'utiliser des mélanges de solvants, par exemple un mélange de xylènes. La durée du chauffage après la fin de l'addition de l'imidazoline est habituellement de 0,5 à 7 heures, de préférence de 1 à 5 heures. Cette première étape sera de préférence poursuivie à la température choisie jusqu'à la fin du dégagement de l'eau formée au cours de la réaction.
La quantité d'eau éliminée au cours de cette première étape est habituellement d'environ 0,15 à 0,6 mole et le plus souvent d'environ 0,2 à 0,5 mole par mole d'imidazoline engagée dans la réaction. Au produit ou mélange issu de cette première étape, après refroidissement éventuel, on ajoute de préférence progressivement au moins une polyamine, de préférence diluée dans un solvant organique, puis habituellement on chauffe à une température comprise entre 65 et 250 °C et de préférence entre 80 et 200 °C. Le solvant employé dans cette deuxième étape est de préférence le même que celui qui est employé dans la première étape et la température est également la même au cours de ces deux étapes. Les réactions sont habituellement effectuées à une température correspondant à la température de reflux. La durée de ce chauffage au cours de cette deuxième étape est habituellement de 0,1 à 7 heures et de préférence de 0,2 à 5 heures. La quantité de polyamine employée est d'au moins 0,1 mole par mole d'anhydride succinique introduite au cours de la première étape et elle est de préférence telle que la quantité totale d'imidazoline substituée et de polyamine employée dans la préparation soit de 0,8 à 1,2 mole, de préférence de 0,9 à 1,1 mole par mole de dérivé succinique. Le rapport molaire imidazoline substituée sur polyamine est de préférence de 1:1 à 7:1 et de manière la plus préférée de 1:1 à 3:1.

La quantité d'eau éliminée au cours de cette deuxième étape est habituellement telle que la quantité d'eau totale éliminée au cours des deux réactions successives représente de 0,2 à 0,7 mole par mole de dérivé succinique.

Les polyamines de formule (I) sont de préférence celles dans lesquelles $R^1$ est un atome d'hydrogène ou un groupe hydrocarboné ayant de 1 à 30 atomes de carbone, Z est de préférence un groupe $-NR^3-$ dans lequel $R^3$ représente de préférence un atome d'hydrogène ou un groupe hydrocarboné ayant de 1 à 30 atomes de

carbone, chacun des $R^2$ indépendamment représente de préférence un atome d'hydrogène ou un groupe méthyle, n est un nombre entier de 2 à 4 et lorsque Z est un groupe $-NR^3-$ m est de préférence un nombre entier de 1 à 5.

Parmi les composés de formules (I) ci-avant on emploie avantageusement ceux dans lesquels Z est $-NR^3-$, $R^1$ $R^2$ et $R^3$ représentent chacun un atome d'hydrogène, n est égal à 2 et m est un nombre entier de 1 à 5 ou ceux dans lesquels $R^1$ représente un groupe hydrocarboné ayant de préférence de 5 à 24 atomes de carbone, Z représente un groupe $-NR^3-$ dans lequel $R^3$ est un atome d'hydrogène, $R^2$ représente un atome d'hydrogène, n est un nombre entier de 2 à 4, de préférence 3, et m est un nombre entier de 1 à 5, de préférence 1.

Les groupes hydrocarbonés $R^1$ et $R^3$ sont habituellement des groupes alkyles, alcényles, linéaires ou ramifiés, aryles, aryl-alkyles (aralkyles), alkyl-aryles (alkaryles) ou cycloaliphatiques. Les groupes $R^1$et $R^3$ sont de préférence des groupes alkyles ou alcényles, linéaires ou ramifiés. Le groupe hydrocarboné $R^2$ est habituellement un groupe alkyle de préférence linéaire et par exemple méthyle, éthyle, n-propyle ou n-butyle.

Comme composés spécifiques on peut citer : l'ethylènediamine, la propylènediamine, la triéthylènetétramine, la tripropylènetétramine, la tétraéthylènepentamine, la triméthylènediamine, l'hexaméthylène diamine, la di(triméthylène)triamine, les N-alkyl diamino-1,3 propane par exemple le N-dodécyldiamino-1,3 propane, le N-tetradécyldiamino- 1,3 propane, le N-hexadécyldiamino-1,3 propane, le N-octadécyldiamino-1,3 propane, le N-eicosyldiamino-1,3 propane et le N-docosyldiamino-1,3 propane ; on peut également citer les N-alkyldipropylène triamines par exemple la N-hexadécyldipropylène triamine, la N-octadécyldipropylène triamine, la N-eicosyldipropylène triamine et la N-docosyldipropylène triamine ; on peut également citer les N-alcényldiamino-1,3 propane et les N-alcényldipropylène triamines par exemple le N-octadécényldiamino-1,3 propane, le N-hexadécényldiamino-1,3 propane, le N-dodécylényldiamino-1,3 propane, le N-octadécadiényldiamino-1,3 propane et le N-docosényldiamino-1,3 propane. On peut citer à titre d'exemples de diamines N,N disubstituées le N,N-diéthyl diamino-1,2 éthane, le N,N-diisopropyl diamino-1,2 éthane, le N,N-dibutyl diamino-1,2 éthane, le N,N-diéthyl diamino-1,4 butane, le N,N-diméthyl diamino-1,3 propane, le N,N-diéthyl diamino-1,3 propane, le N,N-dioctyl diamino-1,3 propane, le N,N-didécyl diamino-1,3 propane, le N,N-didodécyl diamino-1,3 propane, le N,N-ditétradécyl diamino-1,3 propane, le N,N-dihexadécyl diamino-1,3 propane, le N,N-dioctadécyl diamino-1,3 propane, la N,N-didodécyldipropylène triamine, la N,N-ditétradécyldipropylène triamine, la N,N-dihexadécyldipropylène triamine, la N,N-dioctadécyldipropylène triamine, le N-méthyl, N-butyl diamino-1,2 éthane, le N-méthyl N-octyl diamino-1,2 éthane, le N-éthyl,N-octyl diamino-1,2 éthane, le N-méthyl, N-décyl diamino-1,2 éthane, le N-méthyl N-dodécyl diamino 1,3 propane, le N-méthyl, N-hexadécyl diamino-1,3 propane et le N-éthyl N-octadécyl diamino-1,3 propane.

A titre d'exemples d'étheramines on peut citer le N-(octyloxy-3 propyl)diamino-1,3 propane, le N-(décyloxy-3 propyl)diamino-1,3 propane, le N- (triméthyl-2,4,6 décyl)oxy-3 propyl diamino-1,3 propane.

Il doit être entendu qu'il est possible de mettre en jeu comme composé polyaminé un ou plusieurs composés répondant à la formule (I) et/ou (II).

Comme exemples spécifiques de mélange de composés répondant à la formule (I) on peut citer :

les coupes de diamines grasses répondant à la formule $R^1-NH-(CH_2-)_3NH_2$ dont les groupes $R^1$ sont des radicaux hydrocarbonés aliphatiques en $C_8$, $C_{10}$, $C_{12}$, $C_{14}$, $C_{16}$, $C_{18}$, $C_{20}$ et $C_{22}$, en proportions molaires approximatives données dans le tableau I ci-après.

TABLEAU I

| Coupe (chaines alkyles) | $C_8$ | $C_{10}$ | $C_{12}$ | $C_{14}$ | $C_{16}$ | $C_{18}$ | $C_{18-1}$* | $C_{20}$ | $C_{22}$ |
|---|---|---|---|---|---|---|---|---|---|
| A | 0 | 0 | 0 | 1% | 28% | 71% | 0 | 0 | 0 |
| B | 0 | 0 | 0 | 1% | 5% | 42% | 0 | 12% | 40% |
| C | 3% | 6% | 56% | 18% | 10% | 2% | 5% | 0 | 0 |
| D | 0 | 0 | 0 | 0 | 16% | 4,9% | 79,1% | 0 | 0 |
| E | 0 | 0 | 0 | 2,3% | 31,8% | 24,2% | 39% | 2,7% | 0 |

* $C_{18-1}$ chaîne comportant une insaturation éthylénique.

Les polyamines de formules (II) sont de préférence celles dans lesquelles $R^1$ et $R^3$ représentent chacun un atome d'hydrogène A, B, C et D, identiques ou différents, représentent chacun un groupe alkylidène ayant de 2 à 4 atomes de carbone par exemple éthylidène, propylidène, isopropylidène, butylidène, isobutylidène, a est un nombre entier de 1 à 60 et b et c sont égaux à zéro ou a est un nombre entier de 1 à 59, c est zéro ou un nombre entier tel que la somme a + c soit de 1 à 59 et b est un nombre entier de 1 à 50, avec dans chaque cas la somme a + b + c égale à un nombre entier de 1 à 60.

Comme composés spécifiques de formule (II) on peut citer ceux répondant aux formules :

($II_1$) $NH_2-CH_2-CH_2-(O-CH_2-CH_2-)_aNH_2$

($II_2$) $NH_2-CH(CH_3)-CH_2-(OCH_2-CH(CH_3)-)_aNH_2$

dans lesquelles a est 2, 3, 5, 6 ou environ 33

($II_3$) $NH_2-CH(CH_3)-CH_2-(OCH(CH_3)-CH_2-)_a(OCH_2CH_2)_b(O-CH_2CH(CH_3)-)_cNH_2$

dans laquelle b est environ égal à 8, 9, 15, 16 ou 40 et a + c est environ 2 ou 3.

Ces produits sont en particulier commercialisés par la société TEXACO Chemical sous le nom Jeffamine EDR 148 pour le produit de formule ($II_1$) dans laquelle a = 2, Jeffamine D-230 pour un produit de formule ($II_2$) de masse moléculaire moyenne en nombre de 230, Jeffamine D-400 pour un produit de formule ($II_2$) de masse moléculaire moyenne en nombre de 400, Jeffamine D-2000 pour un produit de formule ($II_2$) de masse moléculaire moyenne en nombre de 2000, Jeffamine ED-600 pour un produit de formule ($II_3$) de masse moléculaire moyenne en nombre de 600, Jeffamine ED-900 pour un produit de formule ($II_3$) de masse moléculaire moyenne en nombre de 900 et Jeffamine ED-2001 pour un produit de formule ($II_3$) de masse moléculaire moyenne en nombre de 2000.

Les compositions de la présente invention peuvent être utilisées sous forme de solution dans le milieu réactionnel ou celui-ci peut être évaporé et éventuellement remplacé par un autre solvant ou mélange de solvant

ou par un diluant.

Les compositions de la présente invention sont principalement utilisées comme additifs multifonctionnels pour un carburant moteur par exemple un carburant à base d'hydrocarbures ou à base d'un mélange d'hydrocarbures et d'au moins un composé oxygéné choisi dans le groupe formé par les alcools et les éthers, ou d'un carburant non hydrocarboné tel que par exemple un alcool ou un mélange d'alcools. Les compositions de la présente invention sont particulièrement bien adaptées pour être utilisées comme additifs pour les carburants employés dans les moteurs à allumage commandé.

A titre d'exemples de carburants moteurs on peut citer les essences telles que par exemple celles définies par la norme ASTM D-439, les gas-oils ou carburants Diesel tels que, par exemple, ceux définis par la norme ASTM D-975. Ces carburants peuvent également contenir d'autres additifs que les compositions de la présente invention par exemple des additifs antidétonants tels que des composés de plomb (par exemple le plomb tétraéthyle), du méthyltertiobutyléther du méthyl-tertioamyléther ou un mélange de méthanol et d'alcool tertiobutylique, des additifs antigels et des réducteurs d'exigence en octane.

Les compositions de la présente invention sont utilisées en quantité suffisante pour obtenir une diminution importante des dépôts sur les divers organes du moteur en particulier au niveau des soupapes d'admission et du carburateur. Habituellement on emploie des quantités représentant de 10 à 1000 ppm en poids de composition (matière active) par rapport au poids du carburant moteur, de préférence de 50 à 700 ppm et le plus souvent de 100 à 500 ppm.

Dans la présente addition, on décrit également des formulations d'additifs pour carburants permettant d'obtenir des propriétés améliorées par rapport à celles obtenues avec les compositions précédentes. Les formulations qui suivent ont en particulier des propriétés de détergence-soupape supérieures à celles des compositions précédentes comme cela sera démontré à l'aide d'une procédure d'essai particulièrement sévère sur banc moteur Mercèdes M102E.

Les formulations d'additifs, notamment pour carburants, comprennent au moins un constituant (A) et au moins un constituant (B), ledit constituant (A) consistant en au moins un polyglycol, soluble dans ledit carburant, de masse moléculaire moyenne en nombre de 480 à 2100 et de formule générale (I) :

$$\text{(I)} \qquad HO\text{-}R\text{-}(\text{-}O\text{-}R\text{-})_x\text{-}O\text{-}R\text{-}OH$$

dans laquelle chacun des groupes R indépendamment représente un groupe hydrocarbonné ayant de 2 à 6 atomes de carbone et x représente le degré moyen de polymérisation; et ledit constituant (B) consistant en au moins une composition telle que celles décrites plus haut.

Dans les formulations, le constituant (A) est de préférence un polyglycol de formule générale (I) ci-avant dans laquelle chacun des groupes R indépendamment représente un groupe alkylène, linéaire ou ramifié, ayant de 2 à 4 atomes de carbone et le plus souvent un groupe éthylène ou propylène. parmi les polyglycols de formule générale (I) particulièrement préférés, on peut citer ceux dans lesquels chacun des groupes R représente un groupe propylène de formule :

CH3-CH-CH2-

|

Le constituant (A) est de préférence un polyglycol de masse moléculaire moyenne en nombre de 600 à 1 800 et le plus souvent de 650 à 1 250. L'indice de polydispersité du polyglycol employé comme constituant (A) dans les formulations selon la présente invention est habituellement d'environ 1 à 1,25 et le plus souvent d'environ 1 à 1,15.

Les formulations perfectionnées d'additifs sont principalement utilisées comme additifs multifonctionnels pour carburants, par exemple pour les carburants à base d'hydrocarbures ou à base d'un mélange d'hydrocarbures et d'au moins un composé oxygéné choisi habituellement dans le groupe formé par les alcools et les éthers, ou les carburants non hydrocarbonés tels que par exemple les alcools ou les mélanges d'alcools. Les formulations sont particulièrement bien adaptées pour être utilisées comme additifs pour les carburants employés dans les moteurs à allumage commandé.

A titre d'exemple de carburants, on peut citer les essences telles que par exemple celles définies par la norme ASTM D-439, les gas-oils ou carburants Diesel tels que, par exemple, ceux définis par la norme ASTM D-975. Ces carburants peuvent également contenir d'autres additifs que les formulations de la présente invention par exemple des additifs antidétonants tels que des composés de plomb (par exemple le plomb tétraéthyle), du méthyltertiobutyléther, du méthyltertioamyléther ou un mélange de méthanol et d'alcool tertiobutylique, des additifs antigels et des réducteurs d'exigence en octane.

Les formulations sont utilisées en quantité suffisante pour obtenir une diminution importante des dépôts

sur les divers organes du moteur, par exemple au niveau du carburateur et plus particulièrement au niveau des soupapes d'admission. Habituellement, on emploi des quantités représentant de 20 a 3 000 ppm (partie par million) en poids de formulation (matière active) par rapport au poids du carburant, de préférence de 80 à 2 000 ppm et le plus souvent de 160 à 1 500 ppm.

Dans les formulations perfectionnées, la quantité du constituant (A) en poids est habituellement d'environ 10 à environ 2 000 ppm, de préférence d'environ 30 à 1 300 ppm et le plus souvent d'environ 60 à 1 000 ppm et la quantité du constituant (B) en poids est habituellement d'environ 10 à 1 000 ppm, de préférence d'environ 50 a 700 ppm et le plus souvent d'environ 100 à 500 ppm. Dans ces formulations, la quantité de chacun des constituants (A) et (B) est habituellemnt telle que le rapport A/B de ces quantités soit d'environ 0,05 : 1 à environ 20 : 1 et de préférence d'environ 0,1 : 1 à environ 10 : 1.

Les exemples suivants illustrent l'invention sans en limiter la portée. Les exemples 9 à 11 sont donnés à titre de comparaison ainsi que 16, 17, 21, 22, 23, 24, 26, 27.

Exemple 1

1018 g d'anhydride polyisobuténylsuccinique (PIBSA), résultant de la condensation de polyisobutène (polyisobutène de masse moléculaire moyenne en nombre de 920), sur l'anhydride maléique (le dosage des fonctions anhydride de ce produit montre que l'on a 0,7 fonction anhydride par mole théorique de PIBSA) et 1018 g de xylène sont chargés dans un réacteur de 2 litres muni d'une agitation mécanique, d'un Dean-Stark et d'un système de régulation de température.

On procède ensuite, à température ambiante et sous agitation, à l'addition goutte à goutte de 148 g (0,423 mole) de 1-(2-hydroxyéthyl)-2-heptadécényl imidazoline diluée dans 148 g de xylène. L'addition est effectuée en 30 minutes et accompagnée d'une augmentation rapide de température du mélange réactionnel d'environ 5 °C. Le mélange est ensuite porté à reflux pendant 3 heures avec élimination d'eau réactionnelle par distillation azéotropique. La quantité d'eau recueillie est de 2,3 ml. L'état d'avancement de la réaction peut également être suivi par spectrométrie infrarouge au niveau de la bande d'absorption de la fonction imine à 1660 $cm^{-1}$ qui disparait progressivement au cours de la réaction.

La température du réacteur est diminuée jusqu'à 50 °C puis maintenue à cette valeur durant le temps de l'addition progressive (goutte à goutte) de 56 g (0,297 mole) de tétraéthylènepentamine diluée dans 49 g de xylène. A la fin de cette addition le mélange est à nouveau porté à reflux pendant 15 minutes. Il se produit de nouveau une élimination d'eau. La quantité totale d'eau recueillie au cours de ces deux étapes de réaction est de 7,2 ml. Le spectre infrarouge montre deux bandes d'absorption (1710 $cm^{-1}$ et 1770 $cm^{-1}$) caractéristique de la fonction succinimide avec un épaulement (1740 $cm^{-1}$ caractéristique de la fonction ester.

On obtient ainsi une solution, à 50 % en poids de matière active, dans le xylène, d'une composition selon l'invention.

L'analyse élémentaire de la composition fait apparaître une teneur en azote de 2,55 % en poids.

Exemple 2

On prépare de la même manière que dans l'exemple 1 une composition selon l'invention en remplaçant la tétraéthylènepentamine par la diéthylènetriamine. 102 g (0,1 mole) de PIBSA à 0,68 fonction anhydride pour 1000 g de produit et 102 g de xylène sont chargés dans le réacteur puis on ajoute progressivement (goutte à goutte) 14 g (0,04 mole) de 1-(2-hydroxyéthyl)-2-heptadécényl imidazoline diluée dans 14 g de xylène. Le mélange est ensuite porté au reflux pendant 3 heures avec élimination de 0,2 ml d'eau par distillation azéotropique. Cette élimination d'eau se produit essentiellement au cours des 170 premières minutes de réaction. Après refroidissement a 50 °C on ajoute progressivement 2,9 g (0,028 mole) de diéthylènetriamine diluée dans 2 g de xylène, puis on porte à reflux 3 heures. Une élimination d'eau se produit (essentiellement durant les 170 premières minutes de réaction). La quantité totale d'eau éliminée au cours des deux étapes est de 0,65 ml. On obtient ainsi une solution, à 50 % en poids de matière active, dans le xylène, d'une composition selon l'invention.

Exemple 3

La procédure décrite dans l'exemple 2 est répétée en remplaçant la diéthylènetriamine par une diamine de suif telle que celle commercialisée sous la marque Dinoram S par la société CECA et correspondant à la coupe E dont les caractéristiques ont été mentionnées dans le tableau I ci-avant. 10,1 g (0,028 mole) de Dinoram S ont été ajoutés dans la deuxième étape. Au total on a constaté l'élimination de 0,85 ml d'eau. On obtient ainsi une solution, à 50 % en poids de matière active, dans le xylène, d'une composition selon l'invention.

Exemple 4

La procédure décrite dans l'exemple 2 est répétée en remplaçant la diéthylènetriamine par 1,68 g (0,028 mole) d'ethylènediamine et en utilisant du toluène comme solvant de réaction au lieu du xylène. On obtient ainsi une solution, à 50 % en poids de matière active, dans le toluène, d'une composition selon l'invention.

Exemple 5

La procédure décrite dans l'exemple 2 est répétée en remplaçant la diéthylènetriamine par la polyoxyalkylèneamine commercialisée par la société TEXACO sous le nom Jeffamine D-230 de masse moléculaire moyenne en nombre de 230. 6,44 g (0,028 mole) de Jeffamine D-230 ont été ajoutés dans la deuxième étape. Au total on a constaté l'élimination de 0,7 ml d'eau. On obtient ainsi une solution, à 50 % en poids de matière active, dans le xylène, d'une composition selon l'invention.

Exemple 6

On répéte l'exemple 5 en employant 11,2 g (0,028 mole) de Jeffamine D-400 vendue par la société TEXACO et ayant une masse moléculaire moyenne en nombre de 400. Au total on a constaté l'élimination de 0,4 ml d'eau. On obtient ainsi une solution, à 50 % en poids de matière active, dans le xylène, d'une composition selon l'invention.

Exemple 7

Dans un réacteur de 2 litres muni d'une agitation mécanique, d'un Dean-Stark et d'un système de régulation de température on introduit 15,6 g (0,15 mole) de N-hydroxyéthyléthylènediamine diluée dans 15,6 g de toluène. On ajoute ensuite progressivement (goutte à goutte) 9 g (0,15 mole) d'acide acétique glacial dilué dans 9 g de toluène. Le mélange est ensuite porté au reflux pendant 16 heures au cours desquelles on élimine 4,8 ml d'eau par distillation azéotropique. Le produit de la réaction est isolé après évaporation sous vide du toluène. On obtient ainsi un produit huileux jaune pale qui a été caractérisé par les moyens classiques d'analyses comme étant la 1-(2-hydroxyéthyl)-2-méthyl imidazoline.

Le spectre infrarouge fait apparaître une bande imine à 1660 $cm^{-1}$ et en spectrométrie de résonance magnétique nucléaire on détecte la présence des deux groupes méthylène du cycle imidazoline et la présence du groupe méthyle en position 2 sur le cycle imidazoline. L'analyse élémentaire fournit un pourcentage d'azote de 22,1 % en poids pour un pourcentage calculé de 21,8 %.

Exemple 8

La procédure décrite dans l'exemple 1 est répétée en remplaçant la 1-(2-hydroxyéthyl)-2-heptadécénylimidazoline par la 1-(2-hydroxyéthyl)-2-méthylimidazoline préparée dans l'exemple 7. On a utilisé 122,4 g (0,12 mole) de PIBSA dilué dans 122,4 g de xylène et 6,1 g (0,048 mole) d'imidazoline préparée dans l'exemple 7 diluée dans 6,1 g de xylène. Au cours de la première étape le reflux est maintenu pendant 3 heures et on élimine 0,9 ml d'eau. Après refroidissement à 50 °C on ajoute 6,36 g (0,034 mole) de tétraéthylènepentamine diluée dans 5 g de xylène puis on porte ensuite au reflux pendant 15 minutes. On recueille au total sur les deux étapes 1,3 ml d'eau. On obtient ainsi une solution, à 50 % en poids de matière active, dans le xylène, d'une composition selon l'invention.

Exemple 9 (comparatif)

Dans un réacteur de 2 litres muni d'une agitation mécanique, d'un Dean-Stark et d'un système de régulation de température on introduit 306 g (0,3 mole) de PIBSA, équivalent à 0,7 fonction anhydride par mole théorique de PIBSA, dilué dans 306 g de xylène, puis on ajoute progressivement (goutte à goutte) 39,7 g (0,21 mole) de tétraéthylènepentamine diluée dans 34 g de xylène. Le mélange est ensuite porté au reflux pendant 5 heures. La quantité d'eau éliminée pendant la réaction est de 5,7 ml. On obtient ainsi une solution, à 50 % en poids de matière active, dans le xylène, d'une composition non conforme à celles de la présente invention.

Exemple 10 (comparatif)

Dans un réacteur de 2 litres muni d'une agitation mécanique, d'un Dean-Stark et d'un système de régulation

de température on introduit 586g (0,40 mole) de PIBSA, équivalent à 0,7 fonction anhydride par mole théorique de PIBSA, dilué dans 500 g de xylène puis on ajoute progressivement (goutte à goutte) à température ambiante 145 g (0,41 mole) de 1-(2-hydroxyéthyl)-2-heptadécényl imidazoline diluée dans 231 g de xylène. Le mélange est ensuite porté à reflux pendant 195 minutes. La quantité d'eau éliminée pendant la réaction est de 3,5 ml. On obtient ainsi une solution, à 50 % en poids de matière active, dans le xylène, d'une composition non conforme à celles de la présente invention.

Exemple 11 (comparatif)

Dans un réacteur de 2 litres muni d'une agitation mécanique, d'un Dean-Stark et d'un système de régulation de température on introduit 1018 g de PIBSA, équivalent à 0,7 fonction anhydride par mole théorique de PIBSA, dilué dans 1018 g de xylène puis on ajoute progressivement (goutte à goutte) à température ambiante un mélange de 148 g (0,423 mole) de 1-(2-hydroxyéthyl)-2-heptadécényl imidazoline et de 56 g (0,297 mole) de tétraéthylènepentamine diluée dans 190 g de xylène. Le mélange est ensuite porté au reflux pendant 195 minutes. La quantité d'eau recueillie est de 13,5 ml.
On obtient ainsi une solution, à 50 % en poids de matière active, dans le xylène, d'une composition non conforme à celles de la présente invention.

Exemple 12

On procède à l'évaluation des propriétés de détergence "carburateur" des compositions préparées dans les exemples 1, 3, 4, 8, 9 et 10. La procédure d'essai moteur est effectuée en suivant la norme européenne R5-CEC-FO3-T-81. Les résultats sont exprimés en terme de mérite de zéro à dix. Un mérite 10 correspond à un carburateur propre et un mérite 0 à un carburateur très encrassé. Les compositions sont ajoutées au carburant de manière à obtenir une concentration de 300 ppm en poids de matière active dans le carburant additivé.

| Carburant | Mérite |
|---|---|
| Carburant seul | 1,9 - 2,3 |
| Carburant + composition exemple 1 | 8,5 - 8,6 |
| Carburant + composition exemple 3 | 8,3 - 8,5 |
| Carburant + composition exemple 4 | 8,4 - 8,6 |
| Carburant + composition exemple 8 | 8,5 - 8,7 |
| Carburant + composition exemple 9 | 7,6 - 7,8 |
| Carburant + composition exemple 10 | 3,7 - 3,9 |

Le carburant utilisé dans ces évaluations est un supercarburant classique additivé en alkyles de plomb à 0,4 g de plomb par litre (carburant seul).
Ce supercarburant comprend en volume :
48,1 % de paraffines
15,4 % d'oléfines
29,2 % d'aromatiques
et 4,3 % de naphténiques

Exemple 13

On procède à l'évaluation des propriétés de détergence de soupapes des compositions préparées dans les exemples 1, 3, 4, 8, 9, 10 et 11. Les essais ont été réalisés sur véhicule Renault 25 GTX par traitements de type préventif sur un parcours de 5 000 km. Au départ de chaque test le moteur est conditionné avec des soupapes neuves que l'on pèse. En fin d'essai, les soupapes sont démontées, lavées à l'hexane, séchées,

puis pesées après élimination physique (par grattage) des dépôts formés sur la soupape côté chambre de combustion. Les résultats présentés ci-après donnent le poids de dépôts mesuré, sur la tulipe de chaque soupape d'admission, par différence entre le poids de la soupape neuve et le poids de la soupape à la fin de chaque essai après élimination des dépôts côté chambre de combustion. La quantité de composition ajoutée dans le supercarburant est de 300 ppm en poids de matière active, ce carburant est celui déjà utilisé dans l'exemple 12.

| Carburant | Poids des dépôts |
|---|---|
| Carburant seul | 360 mg |
| Carburant + composition exemple 1 | 19 mg |
| Carburant + composition exemple 3 | 18 mg |
| Carburant + composition exemple 4 | 20 mg |
| Carburant + composition exemple 8 | 17 mg |
| Carburant + composition exemple 9 | 160 mg |
| Carburant + composition exemple 10 | 108 mg |
| Carburant + composition exemple 11 | 177 mg |

Exemple 14

On procède à l'évaluation des propriétés anti-corrosion des compositions préparées dans les exemples 1 et 8. Les essais consistent à déterminer l'étendue de la corrosion produite sur des échantillons d'acier ordinaire poli en présence d'eau de mer synthétique en suivant la norme ASTM D 665 modifiée (température 32,2 °C, durée 20 heures).

La quantité de composition ajoutée est de 300 ppm en poids de matière active. Le carburant est le même que celui employé dans l'exemple 12. Les résultats sont exprimés en pourcentage (%) de la surface de l'éprouvette corrodée au bout de 20 heures.

| Carburant | % de surface corrodée |
|---|---|
| Carburant seul | 100 % |
| Carburant + composition exemple 1 | 0 % |
| Carburant + composition exemple 8 | 0 % |

Exemple 15

On prépare des solutions à 40% en poids de matière active, dans le xylène, de formulations F1 à F5 comprenant diverses quantités pondérales de la composition obtenue dans l'exemple 1 servant dudit constituant (B) et pour certaines d'entres elles du polypropylèneglycol (constituant (A)) de formule :

```
HO-CH-CH2-(-O-CH-CH2-)x-O-CH-CH2-O
   |         |          |
   CH3       CH3        CH3
```

dont la masse moléculaire moyenne en nombre est de 922 (x=13,6) et dont la polydispérsité est de 1,1. La formulation F1 contient le constituant (B) formé par la composition obtenue dans l'exemple 1 et ne contient pas de polypropylèneglycol; la formulation F2 comprend chacun des constituants (A) et (B) dans un rapport pondéral A/B de 2 : 3, soit environ 0,66 : 1, la formulation F3 comprend chacun des constituants (A) et (B) dans un rapport pondéral A/B de 1 : 1; la formulation F4 comprend chacun des constituants (A) et (B) dans un rapport pondéral A/B de 5 : 3, soit environ 1,66 :1; et la formulation F5 contient le polypropylèneglycol (constituant (A)) décrit ci-avant et ne contient pas de constituant (B).

Exemples 16 à 22 :

Une série d'essais est effectuée de manière à évaluer les propriétés de détergence-soupape de diverses formulations. Les essais ont été réalisés sur banc moteur Mercédes M102E, sans additif dans le cas de l'exemple 16 et avec addition d'additifs dans le carburant dans le cas des exemples 17 à 22 inclus. La procédure d'essai est une procédure classique comprenant l'utilisation d'un moteur ayant 4 cylindres, de type Mercédes M102E, ayant une cylindrée de 2 299 $cm^3$ et un taux de compression de 9/1. La procédure de test est une procédure cyclique, chaque cycle comprenant quatre périodes successives de fonctionnement:

- 30 s (secondes) à 800 tr/min (tours par minute) sous une charge nulle,
- 60 s à 1 300 tr/min sous une charge de 31 newtons (m x kg $s^{-2}$),
- 120 s à 1 850 tr/min sous une charge de 34 newtons et
- 60 s à 3 000 tr/min sous une charge de 37 newtons.

La durée de chaque test est habituellement de 40 à 150 heures; dans les exemples 16 à 22, la durée de l'essai a été fixée à 40 heures.Au départ de chaque test, le moteur est conditionné avec des soupapes neuves que l'on pèse. En fin d'essai, les soupapes sont démontées, lavées à l'hexane, séchées, puis pesées après élimination physique (par grattage) des dépôts formés sur la soupape côté chambre de combustion. Les résultats présentés ci-après donnent la moyenne des dépôts en poids rapportée à une soupape, calculée à partir du poids de dépôts mesuré, sur la tulipe de chaque soupape d'admission, par différence entre le poids de ladite soupape neuve et le poids de ladite soupape à la fin de chaque essai après élimination des dépôts côté chambre de combustion. On évalue également par cotation visuelle l'état de chaque soupape (côté admission : tulipe) en terme de mérite de 1 à 10 selon la procédure habituellement dénommée CRC (initiales anglaises de Coordinating Research Council) par les hommes du métier; les résultats sont exprimés ci-après sous forme de moyenne par soupape; un mérite de 10 correspond à une soupape propre et un mérite de 1 à une soupape treès encrassée. On évalue également, au cours du démontage des soupapes, l'aspect collant ou non collant des dépôts formés sur les soupapes d'admission côté admission. La tendance à former des dépôts d'aspect collant pourrait indiquer, à terme, une tendance à l'apparition future du phénomène dit de collage des soupapes, phénomène qu'il est souhaitable d'éviter. Le carburant utilisé dans ces évaluations est un supercarburant sans plomb, comprenant 2% en volume d'un mélange de méthanol et de tertiobutanol dans un rapport volumique de 1,5 : 1. Ce supercarburant, d'indice d'octane moteur de 85 et d'indice d'octane recherche de 95, a un point initial de distillation de 32°C et un point final de distillation de 227°C; il comprend en volume :

- 49 % d'aromatiques
- 11% d'oléfines
- 40% de composés saturés (paraffines + naphténiques).

Les formulations sont ajoutées au carburant de manière à obtenir une concentration, en poids de matière active dans le carburant additivé, précisée pour chaque exemple dans le tableau II ci-après donnant les résultats obtenus.

TABLEAU II

| Exemple | Additif quantité | Moyenne des dépôts en mg | Moyenne CRC | Aspect des dépôts |
|---|---|---|---|---|
| 16* | 0 ppm | 239 | 7,7 | |
| 17* | F1 : 300 ppm | 113 | 8,9 | collants |
| 18 | F2 : 500 ppm 200 ppm de A et 300 ppm de B | 30 | 9,7 | légèrement collants |
| 19 | F3 : 600 ppm 300 ppm de A et 300 ppm de B | 7 | 9,8 | non collants |
| 20 | F4 : 800 ppm 500 ppm de A et 300 ppm de B | 50 | 8,7 | légèrement collants |
| 21* | F1 : 600 ppm | 120 | 8,6 | collants |
| 22* | F5 : 600 ppm | 203 | 7,8 | |

* comparaison

<u>Exemples 23 à 27 :</u>

Une série d'essais est effectuée de manière à évaluer les propriétés de détergence-soupape de diverses formulations. Les essais ont été réalisés en suivant la procédure décrite en liaison avec les exemples 16 à 22. Dans ces exemples, la durée des essais a été fixée à 60 heures et le carburant employé est un carburant sans plomb, comprenant en volume :

- 26% d'aromatiques
- 6,3% d'oléfines
- 67,7% de composés saturés (paraffines + naphténiques).

Les formulations sont ajoutées au acrburant de manière à obtenir une concentration, en poids de matière active dans le carburant additivé, précisée pour chaque exemple dans le tableau III ci-après donnant les résultats obtenus :

TABLEAU III

| Exemple | Additif quantité | Moyenne des Dépots en mg | Moyenne CRC |
|---|---|---|---|
| 23* | 0 ppm | 172 | 8,8 |
| 24* | F1 : 300 ppm | 80 | 9,5 |
| 25 | F3 : 600 ppm<br>300 ppm de A<br>et 300 ppm de B | 10 | 9,7 |
| 26* | F1 : 600 ppm | 87 | 9,4 |
| 27* | F5 : 600 ppm | 165 | 8,8 |

comparaison*

L'analyse des résultats obtenus dans les exemples précédents montre que les formulations selon la présente invention permettent de réduire très largement les quantités de dépôts formés sur les soupapes d'admission et également de changer l'aspect de ces dépôts par rapport à celui qu'ils ont en présence d'un additif tel que l'aspect de ces dépôts décrits dans les exemples 1 à 8. L'obtention de dépôts d'aspect non collant permet de supposer que le phénomène de collage des soupapes n'apparaîtra pas.

## Revendications

1. Composition, utilisable notamment comme additif multifonctionnel pour carburants moteurs, caractérisée en ce qu'elle résulte dans une première étape de la réaction d'au moins un dérivé succinique choisi dans le groupe formé par les acides et les anhydrides alcénylsucciniques et les acides et les anhydrides polyalcénylsucciniques sur au moins une 1-(2-hydroxyéthyl-)imidazoline substituée en position 2 par un radical alkyle ou alcényle, linéaire ou ramifié, ayant de 1 à 25 atomes de carbone, le rapport molaire imidazoline/dérivé succinique étant de 0,1:1 à 0,9:1, ladite étape étant effectuée dans des conditions telles que l'on forme et que l'on élimine au moins 0,15 mole d'eau par mole d'imidazoline engagée ; et dans une deuxième étape de la réaction du produit issu de la première étape sur au moins une polyamine répondant à l'une des formules générales

(I) 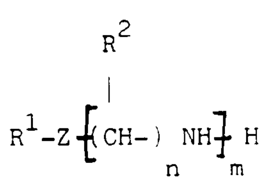 ou

(II) 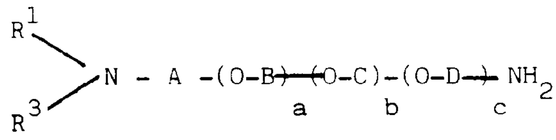

dans lesquelles $R^1$ représente un atome d'hydrogène ou un groupe hydrocarboné ayant de 1 à 60 atomes de carbone, Z est choisi parmi les groupes -O-, et $-NR^3$ - dans lesquels $R^3$ représente un atome d'hydrogène ou groupe hydrocarboné ayant de 1 à 60 atomes de carbone, $R^1$ et $R^3$ pouvant former ensemble avec l'atome d'azote auquel ils sont liés un hétérocycle, chacun des $R^2$ indépendamment représente un atome d'hydrogène ou un groupe hydrocarboné ayant de 1 à 4 atomes de carbone, n est un nombre entier de 2 à 6, m est un nombre entier de 1 à 10 lorsque Z est $-NR^3$ - et un nombre entier de 2 à 10 lorsque Z est -O-, A, B, C et D, identiques ou différents, représentent chacun un groupe hydrocarboné divalent ayant de 2 à 6 atomes de carbone, a est un nombre entier de 1 à 120, b et c, identiques ou différents, sont chacun zéro ou un nombre entier de 1 à 100 et la somme a + b + c est un nombre entier de 1 à 120, la quantité de polyamine mise en réaction étant d'au moins 0,1 mole par mole de dérivé succinique introduit dans la première étape .

2. Composition selon la revendication 1 dans laquelle le dérivé succinique est un anhydride alcénylsuccinique ou polyalcénylsuccinique de masse moléculaire moyenne en nombre de 200 à 3000.

3. Composition selon la revendication 1 ou 2 dans laquelle la polyamine répond à la formule générale (I) :

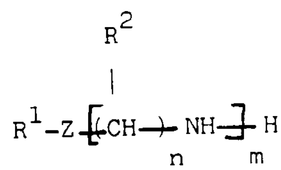

dans laquelle $R^1$ est un atome d'hydrogène ou un groupe hydrocarboné ayant de 1 à 30 atomes de carbone, Z est un groupe $-NR^3$ - dans lequel $R^3$ représente un atome d'hydrogène ou un groupe hydrocarboné ayant de 1 à 30 atomes de carbone, chacun des $R^2$ indépendamment représente un atome d'hydrogène ou un groupe méthyle, n est un nombre entier de 2 à 4 et m est un nombre entier de 1 à 5.

4. Composition selon l'une des revendications 1 à 3 dans laquelle la polyamine répond à la formule générale (I) :

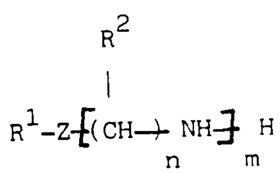

dans laquelle $R^1$ et $R^2$ représentent chacun un atome d'hydrogène, Z représente un groupe $-NR^3$ - dans lequel $R^3$ représente un atome d'hydrogène, n est égal à 2 et m est un nombre entier de 1 à 5.

5. Composition selon l'une des revendications 1 à 3 dans laquelle la polyamine répond à la formule générale (I) :

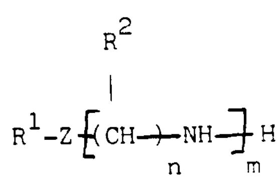

dans laquelle $R^1$ représente un groupe hydrocarboné ayant de 5 à 24 atomes de carbone, Z représente un groupe $-NR^3$ - dans lequel $R^3$ est un atome d'hydrogène, $R^2$ représente un atome d'hydrogène, n est égal à 3

et m est égal à 1.

6. Composition selon la revendication 1 ou 2 dans laquelle la polyamine répond à la formule générale (II) :

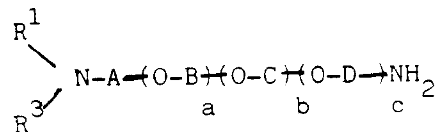

dans laquelle $R^1$ et $R^3$ représentent chacun un atome d'hydrogène, A, B, C et D, identiques ou différents, représentent chacun un groupe hydrocarboné divalent ayant de 2 à 4 atomes de carbone, a est un nombre entier de 1 à 60 et b et c sont égaux à zéro ou a est un nombre entier de 1 à 59, c est zéro ou un nombre entier tel que la somme a + c soit de 1 à 59 et b est un nombre entier de 1 a 50, la somme a + b + c étant dans tous les cas un nombre entier de 1 à 60.

7. Composition selon l'une des revendications 1 à 6 dans laquelle l'imidazoline substituée est choisie dans le groupe formé par la 1-(2-hydroxyéthyl)-2-heptadécénylimidazoline et la 1-(2-hydroxy éthyl)-2-méthylimidazoline.

8. Composition selon l'une des revendications 1 à 7 caractérisée en ce que les réactions sont effectuées à une température de 65 à 250 °C.

9. Composition selon l'une des revendications 1 à 8 caractérisée en ce que les réactions sont effectuées en présence d'un solvant ayant un point d'ébullition d'environ 65 à 250 °C permettant l'élimination azéotropique de l'eau, les dites réactions étant effectuées à la température de reflux.

10. Utilisation d'une composition selon l'une des revendications 1 à 9 comme additif multifonctionnel pour un carburant à base d'hydrocarbures ou d'un mélange d'hydrocarbures et d'au moins un composé oxygéné choisi dans le groupe formé par les alcools et les éthers.

11. Utilisation d'une composition selon l'une des revendications 1 à 9 pour un carburant employé dans les moteurs à allumage commandé.

12. Formulation d'additifs, notamment pour carburants, caractérisée en ce qu'elle comprend au moins un constituant (A) et au moins un constituant (B), ledit constituant (A) consistant en au moins un polyglycol, soluble dans ledit carburant, de masse moléculaire moyenne en nombre de 480 à 2 100 et de formule générale (I) :

$$\text{(I)} \qquad HO\text{-}R\text{-}(\text{-}O\text{-}R\text{-})_x\text{-}O\text{-}R\text{-}OH$$

dans laquelle chacun des groupes R indépendamment représente un groupe hydrocarboné ayant de 2 à 6 atomes de carbone et x représente le degré moyen de polymérisation; et ledit constituant (B) consistant en au moins une composiiton selon l'une des revendications 1 à 9.

13. Formulation selon la revendication 12 dans laquelle le constituant (A) est un polyglycol de formule générale (I) dans laquelle chacun des groupes R indépendamment représente un groupe alkylène, linéaire ou ramifié, ayant de 2 à 4 atomes de carbone.

14. Formulation selon la revendicatin 12 ou 13 dans laquelle le constituant (A) est un polyglycol de formule générale (I) dans laquelle chacun des groupes R indépendammenr représente un groupe éthylène ou propylène.

15. Formulation selon l'une des revendications 12 à 14 dans laquelle le constituant (A) est un polyglycol de fromule générale (I) dans laquelle chacun des groupes R représente un groupe propylène.

16. Formulation selon l'une des revendications 12 à 15 dans laquelle le constituant (A) est un polyglycol de formule générale (I) ayant un indice de polydispersité d'environ 1 à environ 1,25.

17. Utilisation d'une formulation d'additifs selon l'une des revendications 12 à 16 comme additif pour carburant à base d'hydrocarbures ou d'un mélange d'hydrocarbures et d'au moins un composé oxygéné choisi dans le groupe formé par les alcools et les éthers.

18. Utilisation d'une formulation d'additifs selon l'une des revendications 12 à 16 comme additif pour un carburant employé dans les moteurs à allumage commandé.

19. Utilisation selon la revendication 17 ou 18 dans laquelle on ajoute de 20 à 3 000 ppm en poids de la formulation d'additifs dans le carburant.

20. Utilisation selon la revendication 19 dans laquelle la formulation d'additifs comprend de 10 à 2 000 ppm en poids du constituant (A) et de 10 à 1 000 ppm en poids du constituant (B).

21. Utilisation selon la revendication 20 dans laquelle la quantité de chacun des constituants (A) et (B) est telle que le rapport A/B de ces quantités soit environ 0,05 : 1 à environ 20 :1.

## Patentansprüche

1. Zusammensetzung, insbesondere verwendbar als multifunktionelles Additiv für Motorbrennstoffe, dadurch gekennzeichnet, daß sie aus einem ersten Verfahrensabschnitt einer Reaktion von mindestens einem Bernsteinsäurederivat erhalten wird, das aus der Gruppe der Säuren und der Anhydride der Alkenylbernsteinsäuren und den Säuren und Anhydriden der Polyalkenylbernsteinsäure gewählt ist, mit mindestens einem 1-(2-Hydroxyethyl-)Imidazolin, das in Position 2 durch einen linearen oder verzweigten Alkyl- oder Alkenylrest substituiert ist, der zwischen 1 und 25 Kohlenstoffatomen aufweist, wobei das molare Verhältnis Imidazolin/Bernsteinsäurederivat zwischen 0,1:1 und 0,9:1 liegt, wobei der erste Verfahrensabschnitt unter solchen Bedingungen durchgeführt wird, daß mindestens 0,15 Mol Wasser pro Mol des beteiligten Imidazolins gebildet und entfernt wird, und daß in einem zweiten Verfahrensabschnitt der Reaktion das im ersten Verfahrensabschnitt gewonnene Produkt mit mindestens einem Polyamin entsprechend einer der folgenden allgemeinen Formeln reagiert

(I) 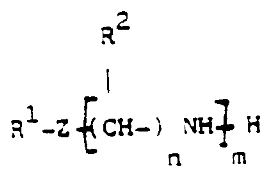 oder

(II) 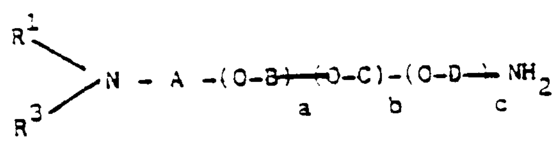

wobei $R^1$ ein Wasserstoffatom oder einen Kohlenwasserstoffrest darstellt, der zwischen 1 und 60 Kohlenstoffatomen aufweist, wobei Z aus den Resten -O- und $-NR^3$ - gewählt wird, wobei $R^3$ein Wasserstoffatom darstellt oder einen Kohlenwasserstoffrest, der zwischen 1 und 60 Kohlenstoffatomen aufweist, wobei $R^1$ und $R^3$ gemeinsam mit dem Stickstoffatom, mit dem sie verbunden sind, einen Heterozyklus bilden können, wobei jedes der $R^2$ unabhängig ein Wasserstoffatom oder einen Kohlenwasserstoffrest darstellt, der zwischen 1 und 4 Kohlenstoffatomen aufweist, wobei n eine ganze Zahl zwischen 2 und 6 ist, wobei m eine ganze Zahl zwischen 1 und 10 ist, wenn Z ein $-NR^3$- Rest ist und eine ganze Zahl zwischen 2 und 10, wenn Z ein -O- Rest ist, wobei A,B,C und D, die identisch oder unterschiedlich sind, jeweils einen zweiwertigen Kohlenwasserstoffrest darstellen, der zwischen 2 und 6 Kohlenstoffatomen aufweist, wobei a eine ganze Zahl zwischen 1 und 120 ist, b und c, die identisch oder unterschiedlich sind, jeweils 0 oder eine ganze Zahl zwischen 1 und 100 sind und die Summe a+b+c eine ganze Zahl zwischen 1 und 120 ist, wobei die Menge des an der Reaktion beteiligten Polyamins mindestens 0,1 Mol pro Mol des Bernsteinsäurederivats ausmacht, das während des ersten Verfahrensabschnitts eingeführt wird.

2. Zusammensetzung nach Anspruch 1, bei der das Bernsteinsäurederivat durch ein Alkenylbernsteinsäure-Anhydrid oder ein Polyalkenylbernsteinsäure-Anhydrid mit einem mittleren Molekulargewicht zwischen 200 und 3000 gebildet ist.

3. Zusammensetzung nach einem der Ansprüche 1 oder 2, bei der das Polyamin der allgemeinen Formel (I) entspricht:

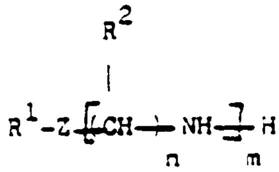

wobei $R^1$ ein Wasserstoffatom oder einen Kohlenwasserstoffrest darstellt, der zwischen 1 und 30 Kohlenstoffatomen aufweist, wobei Z ein $-NR^3$- Rest ist, bei dem $R^3$ durch ein Wasserstoffatom oder einen Kohlenwasserstoffrest gebildet ist, der zwischen 1 und 30 Kohlenstoffatomen aufweist, wobei jedes $R^2$ unabhängig ein

Wasserstoffatom oder einen Methylrest darstellt, wobei n eine ganze Zahl zwischen 2 und 4 ist und m eine ganze Zahl zwischen 1 un 5.

4. Zusammensetzung nach einem der Ansprüche 1 bis 3, bei der das Polyamin der allgemeinen Formel (I) entspricht:

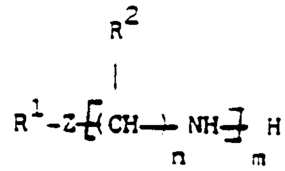

wobei $R^1$ und $R^2$ jeweils ein Wasserstoffatom darstellen, wobei Z einen $-NR^3$-Rest darstellt, beidem $R^3$ein Wasserstoffatom darstellt, wobei n = 2 ist und m eine ganze Zahl zwischen 1 und 5 ist.

5. Zusammensetzung nach einem der Ansprüche 1 bis 3, bei der das Polyamin der allgemeinen Formel (I) entspricht:

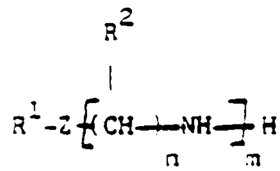

wobei $R^1$ einen Kohlenwasserstoffrest darstellt, der zwischen 5 und 24 Kohlenstoffatomen aufweist, wobei Z einen $-NR^3$- Rest darstellt, bei dem $R^3$ ein Wasserstoffatom ist, wobei $R^2$ ein Wasserstoffatom darstellt, wobei n = 3 und m = 1 ist.

6. Zusammensetzung nach einem der Ansprüche 1 oder 2, bei der das Polyamin der allgemeinen Formel (II) entspricht:

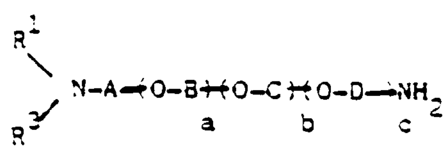

wobei $R^1$ und $R^3$ jeweils ein Wasserstoffatom darstellen, wobei A,B,C und D, die identisch oder unterschiedlich sind, jeweils einen zweiwertigen Kohlenwasserstoffrest darstellen, der zwischen 2 und 4 Kohlenstoffatomen aufweist, wobei a eine ganze Zahl zwischen 1 und 60 ist, und b und c = 0 sind, oder a eine ganze Zahl zwischen 1 und 59 ist, c = 0 oder eine ganze Zahl ist, so daß die Summe a + c zwischen 1 und 59 liegt, und b eine ganze Zahl zwischen 1 und 50 ist, wobei die Summe a+b+c in allen Fällen eine ganze Zahl zwischen 1 und 60 ist.

7. Zusammensetzung nach einem der Ansprüche 1 bis 6, bei der das substituierte Imidazolin aus der Gruppe gewählt ist, die durch 1-(2-Hydroxyethyl)-2-Heptadezenylimidazolin und 1-(2-Hydroxyethyl)-2-Methylimidazolin gebildet ist.

8. Zusammensetzung nach einem der Ansprüche 1 bis 7, dadurch gekennzeichnet, daß die Reaktionen bei einer Temperatur zwischen 65 und 250°C durchgeführt werden.

9. Zusammensetzung nach einem der Ansprüche 1 bis 8, dadurch gekennzeichnet, daß die Reaktionen in Anwesenheit eines Lösungsmittels erfolgen, das einen Siedepunkt bei ungefähr 65 bis 250°C aufweist, so daß ein azeotropisches Entfernen des Wassers möglich ist. wobei die Reaktionen bei der Temperatur des Rückflusses durchgeführt werden.

10. Verwendung einer Zusammensetzung nach einem der Ansprüche 1 bis 9, als mulitfunktionelles Additiv für Brennstoffe auf der Basis von Kohlenwasserstoffen oder einer Mischung von Kohlenwasserstoffen und mindestens einer Sauerstoffverbindung, die aus der Gruppe der Alkohole und der Ether gewählt ist.

11. Verwendung einer Zusammensetzung nach einem der Ansprüche 1 bis 9 für einen Brennstoff, der für Motoren mit Zündsteuerung verwendet wird.

12. Formulierung der Additive, insbesondere für Brennstoffe, dadurch gekennzeichnet, daß sie mindestens eine Komponente (A) und mindestens eine Komponente (B) enthält, wobei die Komponente (A) aus mindestens

einem Polyglykol besteht, das in dem Brennstoff löslich ist, ein mittleres Molekulargewicht zwichen 480 un 2100 aufweist und der allgemeinen Formel (I) entspricht:

(I) $HO\text{-}R\text{-}(\text{-}O\text{-}R\text{-})_x\text{-}O\text{-}R\text{-}OH$

wobei jede der R - Reste unabhängig einen Kohlenwasserstoffrest darstellt, der zwischen 2 und 6 Kohlenstoffatomen aufweist und wobei x den mittleren Polymerisationsgrad darstellt und wobei die Komponente (B) aus mindestens einer Verbindung entsprechend einem der Ansprüche 1 bis 9 besteht.

13. Formulierung nach Anspruch 12, bei der die Komponente (A) ein Polyglykol der allgemeinen Formel (I) ist, in der jeder der R-Reste unabhängig einen linearen oder verzweigten Alkylenrest darstellt, der zwischen 2 und 4 Kohlenstoffatomen aufweist.

14. Formulierung nach Anspruch 12 oder 13, bei der die Komponente (A) ein Polyglykol der allgemeinen Formel (I) ist, wobei jeder der R-Reste unabhängig einen Ethylen-oder Propylenrest darstellt.

15. Formulierung nach einem der Ansprüche 12 bis 14, bei der die Komponente (A) ein Polyglykol der allgemeinen Formel (I) ist, wobei jeder der R-Reste einen Propylenrest darstellt.

16. Formulierung nach einem der Ansprüche 12 bis 15, bei der die Komponente (A) ein Polyglykol der allgemeinen Formel (I) ist, das einen Polydispersitätsgrad von ungefähr 1 bis ungefähr 1,25 aufweist.

17. Verwendung einer Formulierung der Additive entsprechend einem der Ansprüche 12 bis 16 als Additiv für Brennstoffe auf der Basis von Kohlenwasserstoffen oder einer Mischung von Kohlenwasserstoffen und mindestens einer Saurstoffverbindung, die aus der Gruppe der Alkohole und der Ether gebildet ist.

18. Verwendung einer Formulierung der Additive entsprechend einem der Ansprüche 12 bis 16 als Additiv für einen Brennstoff, der für Motoren mit Zündsteuerung verwendet wird.

19. Verwendung nach Anspruch 17 oder 18, bei der dem Brennstoff der zwischen 20 und 3000 ppm in Gewicht der Formulierung der Additive hinzugefügt wird.

20. Verwendung nach Anspruch 19, bei der die Formulierung der Additive zwischen 10 und 2000 ppm in Gewicht der Komponente (A) und zwischen 10 und 1000 ppm in Gewicht der Komponente (B) enthält.

21. Verwendung nach Anspruch 20, bei der die Menge jeder der Komponenten (A) und (B) so bemessen ist, daß das Verhältnis A/B dieser Mengen ungefähr 0,05:1 bis ungefähr 20:1 ausmacht.

## Claims

1. Composition, particularly usable as a multifunction additive for engine fuels, characterized in that it results, in a first stage, from the reaction of at least one succinic derivative selected from the group constituted by the alkenylsuccinic acids and anhydrides and the polyalkenylsuccinic acids and anhydrides with least one 1-(2-hydroxyethyl-)imidazoline substituted in the 2-position linear or branched alkyl or alkenyl radical with 1 to 25 carbon atoms, the imidazoline to succinic derivative molar ratio ranging from 0.1:1 to 0.9:1, said stage being carried out under conditions such that at least 0.15 mole of water per mole of utilized imidazoline are formed and removed ; and in a second stage from reaction of the product obtained at the end of the first stage with at least one polyamine corresponding to one of the following general formulas :

(I)

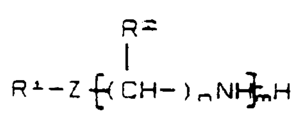

or

(II)

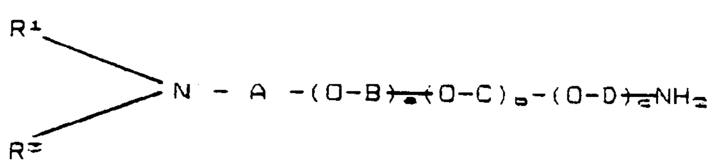

in which $R^1$ represents a hydrogen atom or a hydrocarbon group with 1 to 60 carbon atoms, Z is selected among the -O- and $-NR^3-$ groups in which $R^3$ represents a hydrogen atom or a hydrocarbon group with 1 to 60 carbon atom $R^1$ and $R^3$ can form together with the nitrogen atom to which they are linked a heterocycle, each $R^2$ independently representing a hydrogen atom or a hydrocarbon group with 1 to 4 carbon atoms is an integral number from 2 to 6, m is an integral number from 1 to 10 when Z is $-NR^3-$ and an integral number from 2 to 10 when Z is -O-, A,B,C and D, indentical or different, represent each a divalent hydrocarbon group with 2 to 6 carbon

atoms a is an integral number from 1 to 120, b and c, identical or different, are each zero or an integral number from 1 to 100 and the sum a + b + c is an integral number from 1 to 120, the amount of polyamine reacted being at least 0.1 mole per mole of succinic derivative introduced during the first stage.

2. A composition according to claim 1 wherein the succinic derivative is an alkenylsuccinic or polyalkenylsuccinic anhydride with an average molecular mass ranging from 200 to 3,000.

3. A composition according to claim 1 or 2 wherein the polyamine corresponds to the general formula (I) :

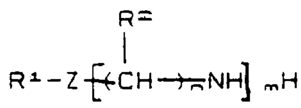

in which $R^1$ is a hydrogen atom or a hydrocarbon group with 1 to 30 carbon atoms, Z is a $-NR^3-$ group in which $R^3$ represents a hydrogen atom or a hydrocarbon group with 1 to 30 carbon atoms, each $R^2$ independently represents a hydrogen atom or a methyl group, n is an integral number from 2 to 4 and m is an integral number from 1 to 5.

4. A composition according to one of claims 1 to 3 wherein the polyamine corresponds to the general formula (I) :

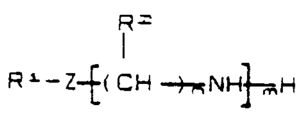

in which $R^1$ and $R^2$ each represent a hydrogen atom, Z represents a $-NR^3-$ group in which $R^3$ represents a hydrogen atom n is equal to 2 and m is an integral number from 1 to 5.

5. A composition according to one of claims 1 to 3 wherein the polyamine corresponds to the general formula (I) ;

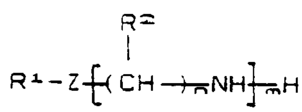

in which $R^1$ represents a hydrocarbon group with 5 to 24 carbon atoms, Z represents a $-NR^3-$ group in which $R^3$ is a hydrogen atom , $R^2$ represents a hydrogen atom n is equal to 3 and m is equal to 1.

6. A composition according to claim 1 or 2 wherein the polyamine corresponds to the general formula (II) :

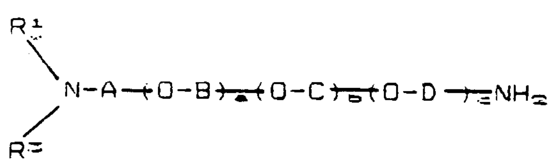

in which $R^1$ and $R^3$ each represent a hydrogen atom A, B, C and D, identical or different, represent each a divalent hydrocarbon group with 2 to 4 carbon atoms, a is an integral number from 1 to 60 and b and c are equal to zero or a is an integral number from 1 to 59, c is zero or an integral number so that the sum a + b + c ranges from 1 to 59 and b is an integral number from 1 to 50, the sum a + b + c being in all cases an integral number from 1 to 60.

7. A composition according to one of claims 1 to 6 wherein the substituted imidazoline is selected from the group constituted by 1-(2-hydroxyethyl)-2-heptadecenylimidazoline and 1-(2-hydroxyethyl)-2-methylimidazoline.

8. A composition according to one of claims 1 to 7 characterized in that the reactions are carried out at a temperature ranging from 65 to 250°C.

9. A composition according to one of claims 1 to 8 characterized in that the reactions are carried out in the presence of a solyent with a boiling point ranging from about 65 to 250°C, allowing the azeotropic removal of the water, said reactions being carried out at the reflux temperature.

10. Utilization of a composition according to one of claims 1 to 9 as a multifunction additive for a fuel based on hydrocarbons or a mixture of hydrocarbons and at least one oxygen compound selected from the group constituted by alcohols and ethers.

11. Utilization of a composition according to one of claims 1 to 9 for a fuel used in spark ignition engines.

12. Formulation of additives, particularly for fuels, characterized in that it comprises at least one constituent (A) and at least one constituent (B), said constituent (A) consisting of at least one polyglycol, soluble in said fuel, with an average molecular mass ranging from 480 to 2,100 and of the general formula (I):

$$\text{(I)} \qquad HO\text{-}R\text{-}(\text{-}O\text{-}R\text{-})_x\text{-}O\text{-}R\text{-}OH$$

in which each R group independently represents a hydrocarbon group with 2 to 6 carbon atoms and x represents the average degree of polymerization; and said constituent (B) consisting of at least one composition according to one of claims 1 to 9.

13. A formulation according to claim 12 wherein constituent (A) is a polyglycol of the general formula (I) in which each R group independently represents a linear or branched alkylene group with 2 to 4 carbon atoms.

14. A formulation according to claim 12 or 13 wherein constituent (A) is a polyglycol of the general formula (I) in which each R group independently represents an ethylene or propylene group.

15. A formulation according to one of claims 12 to 14 wherein constituent (A) is a polyglycol of the general formula (I) in which each R group represents a propylene group.

16. A formulation according to one of claims 12 to 15 wherein constituent (A) is a polyglycol of the general formula (I) with a polydispersivity number ranging from about 1 to about 1.25.

17. Utilization of a formulation of additives according to one of claims 12 to 16 as an additive for a fuel based on hydrocarbons or a mixture of hydrocarbons and at least one oxygen compound selected from the group constituted by alcohols and ethers.

10. Utilization of a formulation of additives according to one of claims 12 to 16 as an additive for a fuel used in spark ignition engines.

19. Utilization according to claim 17 or 18 wherein 20 to 3,000 ppm by weight of the formulation of additives is added to the fuel.

20. Utilization according to claim 19 wherein the formulation of additives comprises 10 to 2,000 ppm by weight of constituent (A) and 10 to 1,000 ppm by weight of constituent (B).

21. Utilization according to claim 20 wherein the amount of each constituent (A) and (B) is such that the A/B ratio of these amounts ranges from about 0.05:1 to about 20:1.